# FASCICULE DE BREVET EUROPEEN

(11) **EP 4 153 850 B1**
(45) Date de publication et mention de la délivrance du brevet: **28.02.2024**
(21) Numéro de dépôt: 21725271.7
(22) Date de dépôt: 11.05.2021
(51) Int. Cl.: F02B 77/04, F02B 77/08

(54) **PROCÉDÉ DE DÉCALAMINAGE D'UN MOTEUR THERMIQUE PAR INJECTION D'HYDROGÈNE ET STATION DE DÉCALAMINAGE POUR SA MISE EN OEUVRE**
VERFAHREN ZUM ENTZUNDERN EINER BRENNKRAFTMASCHINE DURCH WASSERSTOFFEINSPRITZUNG UND ENTZUNDERUNGSSTATION ZUR DURCHFÜHRUNG DES VERFAHRENS
METHOD FOR DESCALING A COMBUSTION ENGINE BY HYDROGEN INJECTION AND DESCALING STATION FOR IMPLEMENTING SAME

(30) Priorité: 20.05.2020 FR 2005353
(43) Date de publication de la demande: 29.03.2023
(73) Titulaire: Alphagreen Développement, 25000 Besançon (FR)
(72) Inventeur: CHEVENEMENT, Ludovic, 25000 Besançon (FR)
(74) Mandataire: Radzimski, Eric
(86) Numéro de dépôt international: PCT/IB2021/053977
(87) Numéro de publication internationale: WO 2021/234506

(56) Documents cités:
- DE-A1-102015 110 970
- US-A1- 2018 313 264
- US-A1- 2020 032 701
- US-A1- 2020 131 986

## Description

### Domaine technique

La présente invention se rapporte de manière générale aux techniques de dépollution des moteurs à combustion interne (ou moteurs thermiques), et plus particulièrement à un procédé de décalaminage d'un moteur thermique par injection d'hydrogène ainsi qu'à une station de décalaminage pour sa mise en oeuvre.

L'invention trouve des applications, en particulier, dans l'entretien des moteurs à combustion interne mis en oeuvre dans les véhicules automobiles de toutes sortes, dans le domaine terrestre (véhicule personnels et utilitaires, camions de transport routier, véhicules agricoles, véhicules militaires, engins de chantiers pour les travaux publics ou les travaux forestiers, etc.) mais aussi dans d'autres domaines comme la marine ou l'aéronautique, ou encore dans les moteurs thermiques de génératrices. Les exemples ainsi donnés ne sont pas limitatifs.

### Technique antérieure

L'encrassement des moteurs à combustion interne des véhicules automobiles est essentiellement dû aux conditions actuelles de la circulation automobile, à savoir, notamment :
- les trajets sont de longueur de plus en plus réduite, en raison de l'évolution des cas d'usage des véhicules par les particuliers et les professionnels ;
- les démarrages des moteurs sont de plus en plus fréquents (en raison notamment des systèmes d'arrêt et de redémarrage dits « *Stop and Start* » visant à une réduction de la consommation globale dans les environnements urbains) ;
- les limitations de vitesse sont de plus en plus basses, en raison des volontés étatiques de réduire la mortalité sur les routes ;
- la qualité de certains carburants vendus dans des enseignes à bas coûts (« *low cost* »), de plus en plus souvent dépourvus d'additif détergents pour des raisons d'économie afin de baisser le prix affiché des carburants vendus ;
- les normes anti-pollution de plus en plus sévères, qui conduisent les constructeurs automobiles à paramétrer le fonctionnement des moteurs dans le souci de limiter les émissions mesurables lors des tests de validation administrative des nouveaux modèles de véhicule ;
- les pratiques de conduite à bas régime, de plus en plus généralement adoptées par les conducteurs dans le souci de l'économie de carburant, dont le coût représente une part croissante dans le budget des ménages.

Les résidus carbonés de combustion (*i.e.*, la calamine) s'installent à l'intérieur du moteur, notamment dans des parties sensibles telles que :
- le turbocompresseur (ou turbo) : la calamine empêche les ailettes de suralimentation de s'incliner ;
- le circuit d'admission d'air : la calamine obstrue l'entrée d'air dans le cylindre, ce qui entraine un effort supplémentaire du moteur ;
- les soupapes : une fois la calamine installée, le siège de soupape n'est plus 100% étanche et cela peut jouer sur la compression du cylindre ;
- le système EGR (de l'anglais « *Exhaust Gas Recirculation* » qui signifie recirculation des gaz brûlés) : les gaz d'échappement véhiculent ces résidus de combustion et les déposent à l'intérieur de la vanne EGR ; une accumulation de calamine en altère le mouvement ;
- la tête des injecteurs : la calamine empêche une bonne diffusion du carburant lors de l'injection ;
- le catalyseur : la calamine obstrue ses alvéoles ;
- le filtre à particules (FAP) : la calamine entraîne son colmatage ;
- etc.

Le décalaminage d'un moteur à combustion interne vise à lutter contre l'accumulation dans le moteur de ces résidus charbonneux, ou suies, qui est responsable de leur encrassement au fil du temps. Ces résidus fragilisent les pièces susmentionnées du moteur, notamment, et provoquent des effets néfastes sur les performances du moteur et sur l'émission de matières ou particules nocives dans l'environnement.

Dans le passé, chaque utilisateur a pu compter, dans une certaine mesure et avec des bonheurs divers, sur les détergents contenus dans le carburant haut de gamme, voire, sur les additifs dits "décalaminant", pour maintenir son moteur propre.

Depuis quelques années, le décalaminage d'un moteur par injection d'hydrogène a fait son apparition et offre une alternative efficace et peu onéreuse au regard des bienfaits qui peuvent en être attendus. Ce procédé consiste à injecter de l'hydrogène à l'intérieur du moteur d'un véhicule dans l'admission du moteur, tout en le faisant fonctionner à bas régime, véhicule à l'arrêt, pendant une durée comprise entre trente minutes et une heure-et-demi environ. Ceci a pour effet de décoller les dépôts de suie de l'intérieur du moteur, ces suies étant alors brûlées et/ou dégagées dans l'échappement. Le véhicule, une fois débarrassé des résidus de combustion qui polluent son moteur, retrouve sensiblement l'ensemble des performances données par le constructeur pour un véhicule équipé d'un moteur neuf, et voit notamment diminuer sa consommation de carburant.

Le document US 2020131986A1 divulgue un procédé de nettoyage. Le document FR3041997A divulgue un système de décalaminage comprenant un moyen de commande agencé pour commander une ouverture ou une fermeture de la vanne EGR du moteur en fonction de paramètres du fluide nettoyant injecté, afin de faire mieux circuler le fluide nettoyant dans la partie haut moteur, dans le circuit d'admission, et dans le circuit de recirculation des gaz. Ce pilotage de la vanne EGR qui s'ouvre et se ferme durant le traitement lui permet d'être bien nettoyée.

Le document FR3064025 divulgue une installation de nettoyage comprenant un moyen de diagnostic adapté pour déterminer un taux d'encrassement d'un système de motorisation comprenant un moteur à combustion interne en fonction de paramètres intrinsèques dudit système de motorisation, et un moyen de commande d'un dispositif d'injection d'un fluide de nettoyage du système de motorisation adapté pour fournir audit dispositif d'injection des paramètres de nettoyage fonction du taux d'encrassement du système de motorisation. Ainsi, l'injection de fluide est ajustée en tenant compte d'un taux d'encrassement du système de motorisation dépendant de paramètres intrinsèques du système de motorisation, comme par exemple la géométrie du moteur, le nombre et le diamètre des cylindres, etc., pour une meilleure efficacité du nettoyage.

Dans l'installation de nettoyage selon le document FR3064026, par ailleurs, un moyen de diagnostic est agencé pour déterminer un taux d'encrassement du système de motorisation en fonction d'un taux de défectuosité d'au moins une des pièces mobiles, et un moyen de commande agencé pour fournir au dispositif d'injection des paramètres de nettoyage pour la mise en oeuvre de la séquence de nettoyage, lesdits paramètres de nettoyage étant fonction du taux d'encrassement du système de motorisation. Ainsi, l'injection de fluide de nettoyage est ajustée en tenant compte d'un taux d'encrassement du système de motorisation fonction d'un taux de défectuosité d'au moins une pièce mobile. La séquence de nettoyage est ainsi adaptée au besoin réel du moteur, et non basée uniquement sur un état d'encrassement statistique du moteur.

L'état de la technique synthétisé ci-dessus révèle que le principe général du décalaminage d'un moteur à combustion interne par injection d'hydrogène fait l'objet d'améliorations continues, résultant essentiellement d'interaction avec le véhicule spécifiquement concerné par l'opération en cours.

Toutefois, il apparaît que cette interaction avec ledit véhicule, même si elle permet de prendre en compte l'état du véhicule juste avant la réalisation de l'opération, est encore perfectible.

En particulier, tous les moteurs à combustion interne des véhicules modernes sont gérés électroniquement, par un (ou plusieurs) boîtier(s) de gestion embarqué(s). Ces boîtiers de gestion comprennent chacun au moins un calculateur qui pilote le fonctionnement du moteur en fonction de divers paramètres comme le régime moteur (ralenti, accélération, etc.), la charge du moteur (pleine charge, frein-moteur, etc.), la demande d'accélération (décélération, reprise), la température du moteur, la phase de fonctionnement (démarrage à froid, trajet urbain avec des arrêts et redémarrages fréquents si une fonction « *Stop and Start »* est mise en oeuvre, etc.), et d'autres encore. Grâce à cette technologie, tous les facteurs d'un bon fonctionnement sont pris en compte pour ajuster certains paramètres de contrôle moteur comme la durée de l'injection, l'instant de la pré-injection, l'injection et la post-injection, etc.

L'encrassement du moteur, qui fait partie des paramètres associés au vieillissement des pièces du moteur, est également pris en compte par ces boîtiers de gestion électronique du moteur, en tant que paramètre d'évolution lente.

Cela étant, injecter de l'hydrogène afin d'éliminer ou de réduire la calamine à l'intérieur du moteur lors d'une opération de décalaminage, a pour effet que la gestion électronique du moteur n'est brutalement plus en phase avec l'état réel des pièces qui sont plus particulièrement sujettes au calaminage. Ces pièces sont en effet, du point de vue des boîtiers de gestion électronique du moteur, considérées comme intrinsèquement encrassées avec pour effet une réduction de l'efficience de leur fonctionnement par rapport à ce qu'il était à la mise en service du moteur. Et pourtant ces pièces se trouvent être, d'un coup, partiellement ou totalement régénérées du fait de l'opération de décalaminage qui vient d'être effectuée. Pour cette raison, les paramètres pris en compte par les boîtiers de gestion électronique du moteur qui sont liés à l'encrassement (hauteur de levée des soupapes, taux d'ouverture des injecteurs, taux de colmatage du FAP, etc.) deviennent au moins partiellement erronés dès lors que les effets du vieillissement attribués à la formation progressive de calamine dans le moteur disparaissent en tout ou en partie du fait de l'opération de décalaminage effectuée.

### Exposé de l'invention

L'invention vise à améliorer la situation et propose à cet effet, en substance, d'informer l'ensemble des boîtiers de gestion électronique du moteur de la réalisation d'une opération de décalaminage. Ainsi, la gestion électronique du moteur peut tenir compte du retour à la normale (i.e., aux valeurs initiales ou à des valeurs proches desdites valeurs initiales) des paramètres de fonctionnement du moteur qui sont sensibles au calaminage du moteur, comme la mobilité de la vanne EGR, la levée des soupapes, l'encrassement du FAP, la mobilité des aiguilles des injecteurs, etc.

Ce but est atteint grâce à une méthode de nettoyage impliquant un outil de diagnostic du groupe de motorisation, qui peut interagir avec l'électronique de commande du moteur non seulement pour la lecture d'information et le pilotage de certains organes pendant la procédure de nettoyage, mais qui en outre peut vérifier en temps réel l'état des organes impactés par le nettoyage et mettre à jour des paramètres de la gestion du moteur en conséquence dans l'électronique de commande du groupe de motorisation.

Plus spécifiquement, il est proposé un procédé de de nettoyage d'un groupe de motorisation de véhicule automobile comprenant un moteur à combustion interne, ledit procédé comprenant :
- la lecture par un outil de diagnostic connecté au véhicule automobile, de défauts du groupe de motorisation éventuellement signalés par une électronique de commande du groupe de motorisation durant le fonctionnement antérieur du groupe de motorisation et mémorisés, le cas échéant, dans une mémoire de ladite électronique de commande ;
- la lecture par l'outil de diagnostic en temps réel, moteur tournant, de paramètres de fonctionnement du groupe de motorisation, et l'établissement d'un diagnostic relatif à l'encrassement d'organes du groupe de motorisation en fonction des défauts signalés, le cas échéant, ainsi que desdits paramètres de fonctionnement du groupe de motorisation ;
- la connexion au véhicule d'une station de nettoyage du groupe de motorisation par injection d'un fluide nettoyant, ladite station de nettoyage étant en outre connectée ;
- sous la commande de l'outil de diagnostic et selon une procédure de nettoyage qui dépend du diagnostic établi, nettoyage du groupe de motorisation par injection, moteur tournant, d'un fluide de nettoyage dans l'admission du moteur par une station de nettoyage reliée au véhicule automobile et connectée à l'outil de diagnostic à l'effet de sa commande par ledit outil de diagnostic, avec mise en mouvement simultanée, également sous la commande de l'outil de diagnostic, d'organes mobiles du groupe de motorisation compris parmi les organes dudit groupe de motorisation qui sont sensibles à l'encrassement ;
- l'effacement par l'outil de diagnostic des défauts signalés, le cas échéant, de la mémoire de l'électronique de commande du groupe de motorisation ;
- l'apprentissage, après l'opération de nettoyage, par l'outil de diagnostic, en temps réel, moteur tournant, de l'état effectif d'organes auto-adaptatifs du groupe de motorisation compris parmi les organes dudit groupe de motorisation qui sont sensibles à l'encrassement ; et,
- la mise à jour par l'outil de diagnostic, dans l'électronique de commande du groupe de motorisation, de paramètres de fonctionnement dudit groupe de motorisation normalement influencés par l'encrassement d'organes dudit du groupe de motorisation qui sont sensibles à l'encrassement, pour tenir compte de l'état effectif, après l'opération de nettoyage, des organes auto-adaptatifs du groupe de motorisation parmi les organes dudit groupe de motorisation qui sont sensibles à l'encrassement.

Des modes de mise en oeuvre, pris isolément ou en combinaison, prévoient en outre que :
- le nettoyage du moteur peut être réalisé pendant une durée qui dépend, en outre, de paramètres intrinsèques du groupe de motorisation, comme la cylindrée du moteur ;
- les organes du groupe de motorisation qui sont sensibles à l'encrassement comprennent notamment le turbo, le filtre à particules, la vanne EGR, le boîtier de Bypass, les soupapes, le clapet d'échappement, et les injecteurs ;
- les organes mobiles du groupe de motorisation parmi les organes dudit groupe de motorisation qui sont sensibles à l'encrassement comprennent notamment le turbo, le clapet d'échappement, la vanne EGR, les soupapes et les injecteurs ;
- les organes auto-adaptatifs du groupe de motorisation parmi les organes dudit groupe de motorisation qui sont sensibles à l'encrassement comprennent notamment la vanne EGR, le clapet d'échappement et les soupapes ;
- l'outil de diagnostic peut être une tablette connectée, associée à la station de nettoyage ;
- l'outil de diagnostic peut être connecté à l'électronique de commande du groupe de motorisation par l'intermédiaire de la prise OBD du véhicule ;
- la station de nettoyage peut être fonctionnellement connectée à l'outil de diagnostic par l'intermédiaire d'une liaison USB, une liaison Bluetooth^{™}, ou une liaison Wi-Fi^{™} ; et/ou
- le fluide nettoyant peut être de l'hydrogène.

Dans un deuxième aspect, l'invention a également pour objet un outil de diagnostic adapté pour être fonctionnellement connecté à une station de nettoyage, par injection d'un fluide nettoyant, d'un groupe de motorisation de véhicule automobile comprenant un moteur à combustion interne, ledit outil de diagnostic comprenant des moyens pour la mise en oeuvre de toutes les étapes du procédé selon le premier aspect ci-dessus.

Un troisième aspect de l'invention se rapporte une installation de nettoyage d'un groupe de motorisation de véhicule automobile comprenant un moteur à combustion interne, ladite installation comprenant une station de nettoyage adaptée pour l'injection d'un fluide nettoyant dans le groupe de motorisation, moteur tournant, et un outil de diagnostic selon le deuxième aspect ci-dessus adapté pour être fonctionnellement connecté à une station de nettoyage afin de mettre en oeuvre le procédé selon le premier aspect.

Dans un quatrième et dernier aspect, l'invention a également pour objet un produit programme d'ordinateur comprenant une ou plusieurs séquences d'instructions stockées sur un support de mémoire lisible par une machine comprenant un processeur, lesdites séquences d'instructions étant adaptées pour réaliser toutes les étapes du procédé selon le premier aspect de l'invention lorsque le programme est lu dans le support de mémoire et exécuté par le processeur.

On peut noter une baisse de 10 à 38 % de la consommation pour un véhicule dépollué grâce à la mise en oeuvre de l'invention. Le système proposé, au vu de tels éléments chiffrés, démontre son efficacité, aussi bien en termes d'économie d'énergie, qu'en matière de respect de l'environnement et de prise en compte des problématiques de santé publique liées à la qualité de l'air.

### Brève description des dessins

D'autres caractéristiques et avantages de l'invention apparaîtront encore à la lecture de la description qui va suivre. Celle-ci est purement illustrative et doit être lue en regard des dessins annexés sur lesquels :
[Fig.1] la [Fig.1] est un diagramme fonctionnel illustrant de manière schématique une installation de nettoyage d'un groupe de motorisation d'un véhicule automobile comprenant un moteur à combustion interne, avec un outil de diagniostic et une station de décalaminage, dans laquelle des modes de réalisation de l'invention peuvent être mis en oeuvre ; et,
[Fig.2] la [Fig.2] est un diagramme d'étapes illustrant la mise en oeuvre du procédé de l'invention.

### Description des modes de réalisation

Dans la description de modes de réalisation qui va suivre et dans les Figures des dessins annexés, les mêmes éléments ou des éléments similaires portent les mêmes références numériques aux dessins.

Un moteur à combustion interne rejette, lors de son fonctionnement, des gaz et produits nocifs tels que ;
- le dioxyde de carbone (CO₂) responsable du réchauffement de l'atmosphère ;
- le monoxyde de carbone (CO) qui est responsable en partie de la progression des maladies cardiovasculaires ;
- des hydrocarbures imbrûlées (HC) qui sont cancérigènes ; et,
- du monoxyde et du dioxyde d'azote (qu'on appelle globalement les N0x) sous forme de particules fines hautement nocives pour l'appareil pulmonaire de l'être humain.

Malgré les efforts mis en oeuvre pour réduire ces émissions, notamment en réduisant la consommation de carburant par les moteurs thermiques mais aussi en mettant en oeuvre des techniques de dépollution, l'impact des activités humains impliquant l'utilisation de moteurs thermique reste préoccupant pour la planète et pour l'humanité.

Le décalaminage est un procédé de nettoyage des groupes de motorisation comprenant un moteur à combustion interne, qui contribue à réduire les émissions des produits polluants précités, en luttant contre l'accumulation de suies carbonées dans les organes concernés, laquelle est responsable de la baisse de performances des véhicules et de l'augmentation de polluants avec l'âge du véhicule.

On rappelle que la technique de décalaminage d'un moteur thermique par injection d'hydrogène consiste à injecter de l'hydrogène à l'intérieur du moteur, alors que le moteur fonctionne à bas régime. Cet hydrogène est fabriqué uniquement à base d'eau déminéralisée. Aucun produit chimique n'est ajouté. C'est pourquoi, et bien que d'autres fluides nettoyants soient envisageables, l'hydrogène est actuellement le plus répandu. C'est aussi pourquoi les modes de réalisation considérés ici se rapportent à un nettoyage d'un groupe de motorisation par injection d'hydrogène. L'homme du métier appréciera, toutefois, que la mise en oeuvre de l'invention n'est pas limitée à cet exemple.

L'injection d'hydrogène permet notamment :
- de réduire l'émission par le moteur de particules nocives dans l'atmosphère (CO, CO₂, NOx et HC) ;
- de réduire la consommation de carburant (facteur constaté par la baisse d'émission de CO₂ et des HC) ;
- d'améliorer les performances du moteur (couple et puissance) ; et,
- de nettoyer et régénérer des pièces d'usure telles que les injecteurs, et le cas échéant le turbo, la vanne EGR, le filtre à particules (FAP), etc., ce qui apporte une réduction des risques de changement de ces pièces onéreuses et donc une économie indirecte mais substantielle pour le propriétaire du véhicule.

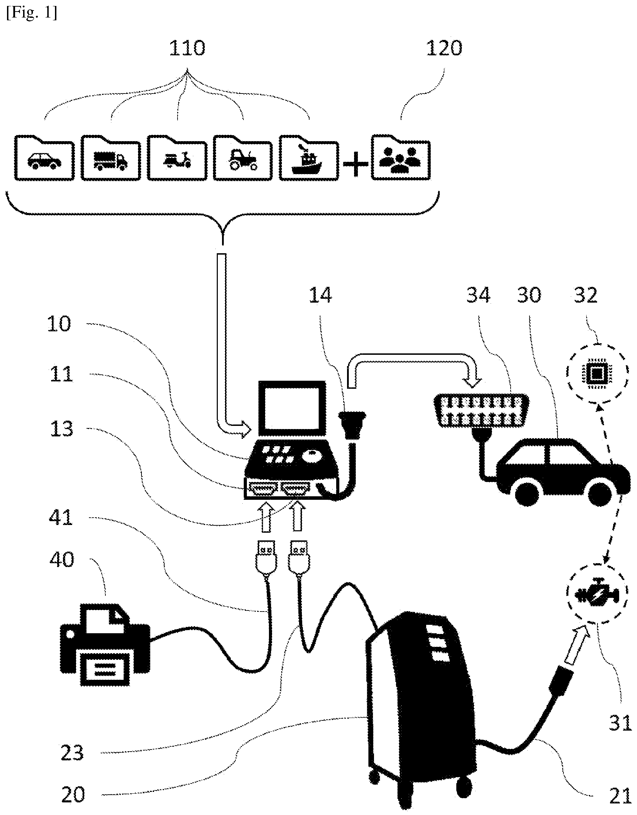

La [Fig.1] montre, de manière très schématique, un diagramme fonctionnel d'une installation de nettoyage d'un groupe de motorisation 31 d'un véhicule automobile 30 comprenant un moteur à combustion interne, avec un outil de diagnostic 10 et une station de décalaminage 20, dans laquelle des modes de réalisation de l'invention peuvent être mis en oeuvre. Comme il deviendra plus apparent pour l'homme du métier à la lumière de la description qui va être donnée dans ce qui suit, les étapes du procédé sont plus particulièrement effectuées par, ou sous la commande directe de l'outil de diagnostic. L'intervention de l'opérateur peut être limitée au branchement des appareils, et au déclenchement du fonctionnement de l'outil qui opère ensuite de manière relativement automatique, notamment pour piloter la station de nettoyage 20 et pour accéder en lecture/écriture à l'électronique de commande 32 du groupe de motorisation 31 du véhicule automobile 30.

Dans un mode de réalisation, l'outil de diagnostic peut être une tablette connectée, associée à la station de nettoyage 20, ou un appareil fonctionnellement équivalent comme un téléphone portable (ou « *smartphone* ») ou un ordinateur portable (ou « *laptop computer* »), équipé(e) d'un logiciel et d'une interface pour communiquer avec les calculateurs embarqués de l'électronique de commande 32. En variante, il peut s'agir d'une valise de diagnostic du marché équipée des logiciels pour les véhicules des principales marques (on dit aussi « valise multi-marques »), ou d'un ordinateur à usage général (« *desktop computer* ») équipé de la même façon, et dotés d'une interface pour communiquer avec les calculateurs embarqués.

On notera que, dans tous les modes de réalisation, l'outil de diagnostic est vendu vierge de tout logiciel et de tout fichier de données correspondant à des procédures de nettoyage. L'utilisateur de la station de nettoyage peut appliquer les procédures exclusives, qu'il aura développées étroitement avec la station de nettoyage qu'il utilise en relation avec l'outil de diagnostic connecté.

Il peut aussi installer dans l'outil de diagnostic 10 les logiciels de diagnostique 110 correspondants aux différents types de véhicules automobiles pris en charge dans son atelier (véhicules légers de tourisme, véhicules utilitaires et poids lourds, véhicules agricoles, engins de chantier bateaux et navires, tracteurs ferroviaires à moteur Diesel, aéronefs, etc.), et le cas échéant un fichier clients 120 qui lui semblera le plus adapté.

Par exemple, l'outil de diagnostic 10 peut être connecté à l'électronique de commande 32 du groupe de motorisation 31 par l'intermédiaire de la prise OBD, référencée 34, du véhicule 30, via un câble d'interface 14. La norme OBD est le seul standard pour tous les constructeurs automobiles. C'est la norme des systèmes de diagnostic embarqué (OBD de l'anglais « *On-Board Diagnostic* ») qui est vise à permettre le contrôle des émissions polluantes en étant capable de déceler l'origine probable d'un dysfonctionnement au moyen de codes d'erreur stockés dans la mémoire du calculateur, notamment lors des séances de contrôle technique. Selon les spécifications de ce standard applicable en Europe, en outre, quand un code défaut OBD majeur est détecté, le calculateur allume le voyant dépollution moteur au tableau de bord. En variante, la connexion fonctionnelle entre l'outil 10 et l'électronique de commande 32 peut également avoir lieu par d'autres moyens, filaires ou sans fil.

Par l'expression tablette connectée « associée » à la station de nettoyage 20, on entend le qu'elle peut être fournie avec ladite station de nettoyage, par le fabricant de cette dernière. Mais il peut aussi s'agir d'une tablette numérique du marché, intelligente et communicante, dans laquelle peut s'exécuter une application qui met en oeuvre le procédé et qui comprend des moyens de connexion opérationnelle, filaires ou sans fil, avec la station de nettoyage 20. En résumé, l'outil de diagnostic 10 peut être connecté à la station de nettoyage 20 par l'intermédiaire d'une liaison filaire 23,13 comme une liaison USB^{™} établie par un câble USB^{™} 23 de la station avec une prise USB^{™} 23 de l'outil 10, par exemple une liaison USB-3^{™}, ou bien par une liaison sans fil par exemple une liaison Bluetooth^{™} ou une liaison Wi-Fi^{™}.

La station de nettoyage 20, comprend en outre un tuyau 21 pour délivrer le fluide nettoyant, ici de l'hydrogène, au groupe de motorisation 31 du véhicule automobile 30, via un moyen ad-hoc de connexion au véhicule. Plus particulièrement, l'hydrogène est injecté dans l'admission du moteur, par exemple via la tubulure (ou conduite) d'admission d'air. Ceci peut avoir lieu en aval du filtre à air, pour un véhicule à allumage commandé (ou véhicule dit « à essence »), ou en aval de la vanne EGR pour un véhicule Diesel.

Enfin, la [Fig.1] montre que l'outil de diagnostic 10 peur également comprendre des moyens de connectivité, comme une autre prise USB^{™} 11, pour être connecté par un câble USB^{™} 41, à un périphérique 40 comme une imprimante, qui permet d'imprimer des rapports diagnostic, avantageusement avant et après le nettoyage opéré. Bien entendu, toute autre interface de connectivité, comme le Bluetooth ou le Wi-Fi^{™} peut être envisagé. Par ailleurs, l'outil peut également être adapté pour se connecter à tout autre équipement dans l'atelier, comme un analyseur de gaz par exemple, pour l'analyse, simultanée ou pas, de la quantité et de la composition des gaz d'échappement, avantageusement avant et après le nettoyage opéré.

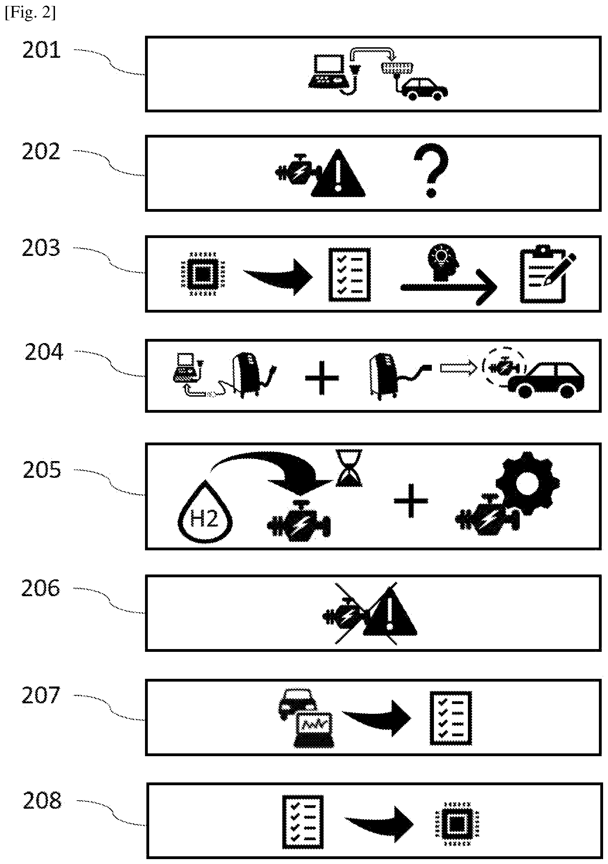

En référence au diagramme d'étapes de la [Fig.2], on va maintenant décrire la mise en oeuvre du procédé de nettoyage du groupe de motorisation du véhicule automobile 30 de la [Fig.1].

Tout d'abord, on notera qu'une mise en oeuvre standard d'un nettoyage moteur par injection d'hydrogène selon l'art antérieur comprend les étapes suivantes, mises en oeuvre par un opérateur dans un atelier spécialisé
- la lecture des éventuels défauts ;
- le branchement de la station de décalaminage au niveau de l'admission du moteur le moteur, par exemple après le filtre à air pour un moteur à allumage commandé, ou après la vanne EGR pour un moteur Diesel ;
- l'injection de l'hydrogène selon la méthode préconisée par le fabriquant de la station (notamment durant un temps selon des indications fournies par le fabriquant de la station) ;
- puis l'arrêt de l'injection d'hydrogène ;
- la lecture et l'effacement des défauts moteur ; et enfin
- la restitution du véhicule au client.

A l'étape 201 du procédé selon des modes de mise en oeuvre de l'invention illustré par le diagramme d'étapes de la [Fig.1], un opérateur réalise la connexion de l'outil de diagnostic 10 au véhicule automobile 30, par exemple via la prise OSB référencée 34 dudit véhicule.

A l'étape 202, l'outil de diagnostic 10 réalise la lecture de défauts du groupe de motorisation éventuellement signalés par l'électronique de commande 32 du groupe de motorisation comprenant le moteur à combustion interne 31, durant le fonctionnement antérieur du groupe de motorisation. De tels défauts sont classiquement mémorisés, le cas échéant, dans une mémoire non volatile de l'électronique de commande 32, par exemple une mémoire EEPROM (de l'anglais « *Electrically Erasable and Programmable Read-only Memory* »), ou une mémoire Flash.

L'étape 203 comprend la lecture par l'outil de diagnostic 10, en temps réel et moteur tournant, de paramètres de fonctionnement du groupe de motorisation. Elle comprend aussi l'établissement, toujours par l'outil de diagnostic 10, d'un diagnostic relatif à l'encrassement d'organes du groupe de motorisation en fonction des défauts signalés, le cas échéant, ainsi que des paramètres de fonctionnement du groupe de motorisation lus dans la mémoire de l'électronique 32. L'homme du métier appréciera qu'il s'agit d'organes du groupe de motorisation qui sont sensibles à l'encrassement par les résidus carbonés (la calamine), notamment le turbo, le filtre à particules, la vanne EGR, le boîtier de Bypass, le clapet d'échappement, les soupapes pilotées par le système de distribution variable ou VVT (de l'anglais « *Variable Valve Timing* »), et les injecteurs. Cette liste n'est pas limitative.

A l'étape 204, l'opérateur réalise la connexion au véhicule 30 de la station de nettoyage 20, qui est adaptée pour assurer le nettoyage du groupe de motorisation par injection d'un fluide nettoyant, à savoir de l'hydrogène dans l'exemple. La station de nettoyage 20 est en outre connectée à l'outil de diagnostic 10 pour opérer sous la commande dudit outil de diagnostic, dans le cadre de la procédure de nettoyage établie par cet outil.

Cette procédure de nettoyage est par exemple établie sur la base de procédures standards dont l'une est sélectionnée et adaptée (par la configuration de paramètres ad-hocs, par exemple) en fonction des défauts relevés à l'étape 202 et du diagnostic établi à l'étape 203, notamment.

Dans un premier exemple, si des défauts sont relevés et/ou si des dysfonctionnements sont constatés au niveau du système EGR, la procédure de nettoyage peut prévoir de :
- faire chauffer le moteur à 80°C ;
- brancher le tuyau d'hydrogène dans la duite d'air située après le filtre à air ;
- lancer l'injection d'hydrogène une fois le moteur mis en route ;
- laisser tourner le moteur au ralenti durant 60 minutes en pilotant l'ouverture et la fermeture de la vanne de recyclage des gaz à l'aide du logiciel de diagnostic ;
- ensuite, durant 30 minutes, faire varier le régime moteur selon la plage de fonctionnement de la vanne EGR ;
- puis accélérer le régime moteur à 2300 tr/min durant 30 minutes ; et enfin ,
- arrêter l'injection d'hydrogène puis rebrancher la durite d'air.

Dans un deuxième exemple, si des défauts sont relevés et/ou si des dysfonctionnements sont constatés au niveau du filtre à particules (FAP), la procédure de nettoyage peut prévoir de :
- relever la valeur de pression différentielle du FAP ;
- faire chauffer le moteur à 80°C ;
- brancher le tuyau d'hydrogène dans la durite d'air située après le filtre à air ;
- lancer l'injection d'hydrogène une fois le moteur mis en route ;
- laisser tourner le moteur au ralenti durant 60 minutes ;
- accélérer le régime moteur à 1800 tr/min durant 30 minutes ;
- accélérer le régime à 2700 tr/min durant 30 minutes ; puis enfin,
- arrêter l'injection d'hydrogène puis rebrancher la durite d'air.

Dans un troisième exemple, si des défauts sont relevés et/ou si des dysfonctionnements sont constatés au niveau du système EGR, la procédure de nettoyage peut prévoir de :
- faire chauffer le moteur à 80°C ;
- brancher le tuyau d'hydrogène dans la duite d'air située après le filtre à air ;
- lancer l'injection d'hydrogène une fois le moteur mis en route ;
- laisser tourner le moteur au ralenti durant 50 minutes ;
- accélérer le régime moteur à 1800 tr/min durant 30 minutes ;
- faire varier le régime moteur de l'entrée à la sortie de plage de suralimentation pendant 30 minutes ; et enfin,
- arrêter l'injection d'hydrogène puis rebrancher la durite d'air.

L'homme du métier appréciera que ces exemples ne sont nullement limitatifs.

La procédure de nettoyage peut aussi, d'une manière générale, prévoir que le nettoyage du moteur sera réalisé pendant une durée qui dépend, en outre, de paramètres intrinsèques du groupe de motorisation, comme la cylindrée du moteur, l'âge et/ou le kilométrage total parcouru par le véhicule depuis sa mise en service, etc. D'autres paramètres plus subjectifs, comme le type d'usage dominant du véhicule (petits trajets quotidiens en cycles urbains, ou au contraire de longs trajets occasionnels sur autoroute, par exemple) et renseignées directement par l'opérateur dans l'outil de diagnostic 10 (dans la mesure où ils sont connus) ou bien récupérés du fichier de données client 120, par exemple, peuvent également être pris en compte pour établir la procédure de nettoyage la plus adaptée au cas particulier du véhicule à décalaminer.

A l'étape 205, l'outil de diagnostic pilote le nettoyage du groupe de motorisation par injection, moteur tournant, du fluide de nettoyage dans l'admission du moteur, à savoir de l'hydrogène dans l'exemple considéré ici. Lors de cette étape, et en même temps que l'injection d'hydrogène est réalisée, les organes mobiles du groupe de motorisation compris parmi les organes dudit groupe de motorisation qui sont sensibles à l'encrassement sont de préférence mis en mouvement, selon des modalités appartenant à la procédure de nettoyage mentionnée au paragraphe précédent, qui dépend du diagnostic établi. Par exemple, les organes mobiles du groupe de motorisation parmi les organes dudit groupe de motorisation qui sont sensibles à l'encrassement comprennent le turbo, la vanne EGR, le clapet d'échappement, les soupapes et les injecteurs. Cette liste n'est pas limitative.

A l'étape 206, l'outil de diagnostic commande l'effacement des défauts signalés avant le nettoyage, le cas échéant, de la mémoire de l'électronique de commande 32 du groupe de motorisation du véhicule 30.

A l'étape 207, l'outil de diagnostic 10 réalise en outre l'apprentissage, après l'opération de nettoyage, en temps réel et moteur tournant, de l'état effectif des organes auto-adaptatifs du groupe de motorisation qui sont compris parmi les organes dudit groupe de motorisation qui sont sensibles à l'encrassement. Par exemple, les organes auto-adaptatifs du groupe de motorisation parmi les organes dudit groupe de motorisation qui sont sensibles à l'encrassement comprennent la vanne EGR, le clapet d'échappement et les soupapes (à travers le système VVT). Cette liste n'est pas limitative non plus.

Enfin, à l'étape 208, l'outil de diagnostic réalise la mise à jour, dans l'électronique de commande 32 du groupe de motorisation du véhicule 10, des paramètres de fonctionnement dudit groupe de motorisation qui sont normalement influencés par l'encrassement d'organes qui sont sensibles à l'encrassement. Ceci permet, avantageusement, de tenir compte de l'état effectif, après l'opération de nettoyage, des organes auto-adaptatifs du groupe de motorisation parmi les organes dudit groupe de motorisation qui sont sensibles à l'encrassement. Dit autrement, le fonctionnement du groupe de motorisation après le nettoyage par injection d'hydrogène tiendra compte du retour desdits organes à un état identique à ou proche de leur état initial, lors de la mise en service du véhicule 10. La réduction de la consommation et carburant et l'émission de produits nocifs dans l'atmosphère sont donc optimisé, de même que les performances du véhicule.

L'homme du métier appréciera que l'ordre de l'étape 206, d'une part, et des étapes 207 et 208, d'autre part, est indifférent.

La présente invention a été décrite et illustrée dans la présente description détaillée et dans les figures des dessins annexés, dans des formes de réalisation possibles. La présente invention ne se limite pas, toutefois, aux formes de réalisation présentées. D'autres variantes et modes de réalisation peuvent être déduits et mis en oeuvre par la personne du métier à la lecture de la présente description et des dessins annexés.

Dans les revendications, le terme "comprendre" ou "comporter" n'exclut pas d'autres éléments ou d'autres étapes. Un seul processeur ou plusieurs autres unités peuvent être utilisées pour mettre en oeuvre l'invention. Les signes de référence ne sauraient être compris comme limitant la portée de l'invention.

## Revendications

1. Procédé de nettoyage d'un groupe de motorisation de véhicule automobile (30) comprenant un moteur à combustion interne (31), ledit procédé comprenant :
- la lecture (202) par un outil de diagnostic connecté au véhicule automobile (30), de défauts du groupe de motorisation éventuellement signalés par une électronique de commande (32) du groupe de motorisation durant le fonctionnement antérieur du groupe de motorisation et mémorisés, le cas échéant, dans une mémoire de ladite électronique de commande ;
- la lecture (203) par l'outil de diagnostic en temps réel, moteur tournant, de paramètres de fonctionnement du groupe de motorisation, et l'établissement d'un diagnostic relatif à l'encrassement d'organes du groupe de motorisation en fonction des défauts signalés, le cas échéant, ainsi que desdits paramètres de fonctionnement du groupe de motorisation ;
- la connexion (204) au véhicule d'une station de nettoyage (20) du groupe de motorisation par injection d'un fluide nettoyant, ladite station de nettoyage étant en outre connectée ;
- sous la commande de l'outil de diagnostic et selon une procédure de nettoyage qui dépend du diagnostic établi, nettoyage (205) du groupe de motorisation par injection, moteur tournant, d'un fluide de nettoyage dans l'admission du moteur par une station de nettoyage reliée au véhicule automobile et connectée à l'outil de diagnostic à l'effet de sa commande par ledit outil de diagnostic, avec mise en mouvement simultanée, également sous la commande de l'outil de diagnostic, d'organes mobiles du groupe de motorisation compris parmi les organes dudit groupe de motorisation qui sont sensibles à l'encrassement, ;
- l'effacement (206) par l'outil de diagnostic des défauts signalés, le cas échéant, de la mémoire de l'électronique de commande du groupe de motorisation ;
- l'apprentissage (207), après l'opération de nettoyage, par l'outil de diagnostic, en temps réel, moteur tournant, de l'état effectif d'organes auto-adaptatifs du groupe de motorisation compris parmi les organes dudit groupe de motorisation qui sont sensibles à l'encrassement ; et,
- la mise à jour (208) par l'outil de diagnostic, dans l'électronique de commande du groupe de motorisation, de paramètres de fonctionnement dudit groupe de motorisation normalement influencés par l'encrassement d'organes dudit du groupe de motorisation qui sont sensibles à l'encrassement, pour tenir compte de l'état effectif, après l'opération de nettoyage, des organes auto-adaptatifs du groupe de motorisation parmi les organes dudit groupe de motorisation qui sont sensibles à l'encrassement.

2. Procédé selon la revendication 1, dans lequel le nettoyage du moteur est réalisé pendant une durée qui dépend, en outre, de paramètres intrinsèques du groupe de motorisation, comme la cylindrée du moteur.

3. Procédé selon la revendication 1 ou la revendication 2, dans lequel les organes du groupe de motorisation qui sont sensibles à l'encrassement comprennent le turbo, le filtre à particules, la vanne EGR, le boîtier de Bypass, les soupapes, le clapet d'échappement, et les injecteurs.

4. Procédé selon l'une la revendication 3, dans lequel les organes mobiles du groupe de motorisation parmi les organes dudit groupe de motorisation qui sont sensibles à l'encrassement comprennent le turbo, le clapet d'échappement, la vanne EGR, les soupapes et les injecteurs.

5. Procédé selon la revendication 3 ou la revendication 4, dans lequel les organes auto-adaptatifs du groupe de motorisation parmi les organes dudit groupe de motorisation qui sont sensibles à l'encrassement comprennent la vanne EGR, le clapet d'échappement et les soupapes.

6. Procédé selon l'une quelconque des revendications 1 à 5, dans lequel l'outil de diagnostic est une tablette connectée, associée à la station de nettoyage.

7. Procédé selon l'une quelconque des revendications 1 à 6, dans lequel l'outil de diagnostic (10) est connecté à l'électronique de commande du groupe de motorisation par l'intermédiaire de la prise OBD (34) du véhicule (30).

8. Procédé selon l'une quelconque des revendications 1 à 7, dans lequel la station de nettoyage (20) est fonctionnellement connectée à l'outil de diagnostic (10) par l'intermédiaire d'une liaison USB^{™} (23,13), une liaison Bluetooth^{™}, ou une liaison Wi-Fi^{™}.

9. Procédé selon l'une quelconque des revendications 1 à 8, dans lequel le fluide nettoyant est de l'hydrogène.

10. Outil de diagnostic adapté pour être fonctionnellement connecté à une station de nettoyage, par injection d'un fluide nettoyant, d'un groupe de motorisation de véhicule automobile (30) comprenant un moteur à combustion interne (31), ledit outil de diagnostic comprenant des moyens pour la mise en oeuvre de toutes les étapes du procédé selon l'une quelconque des revendications 1 à 9.

11. Installation de nettoyage d'un groupe de motorisation de véhicule automobile (30) comprenant un moteur à combustion interne (31), ladite installation comprenant une station de nettoyage adaptée pour l'injection d'un fluide nettoyant dans le groupe de motorisation, moteur tournant, et un outil de diagnostic selon la revendication 10 adapté pour être fonctionnellement connecté à une station de nettoyage afin de mettre en oeuvre le procédé selon l'une quelconque des revendications 1 à 9.

12. Produit programme d'ordinateur comprenant une ou plusieurs séquences d'instructions stockées sur un support de mémoire lisible par une machine comprenant un processeur, lesdites séquences d'instructions étant adaptées pour réaliser toutes les étapes du procédé selon l'une quelconque des revendications 1 à 9 lorsque le programme est lu dans le support de mémoire et exécuté par le processeur.

## Patentansprüche

1. Verfahren zum Reinigen einer Kraftfahrzeugantriebseinheit (30), die einen Verbrennungsmotor (31) umfasst, wobei das Verfahren umfasst:
- Auslesen (202), durch ein an das Kraftfahrzeug (30) angeschlossenes Diagnosewerkzeug, von Defekten der Antriebseinheit, die gegebenenfalls von einer Steuerelektronik (32) der Antriebseinheit während des früheren Betriebs der Antriebseinheit gemeldet und gegebenenfalls in einem Speicher der Steuerelektronik gespeichert wurden;
- Auslesen (203), durch das Diagnosewerkzeug in Echtzeit, bei laufendem Motor, von Betriebsparametern der Antriebseinheit, und Erstellen einer Diagnose in Bezug auf die Verschmutzung von Elementen der Antriebseinheit in Abhängigkeit von den gegebenenfalls gemeldeten Defekten sowie von den Betriebsparametern der Antriebseinheit;
- Anschließen (204) einer Reinigungsstation (20) der Antriebseinheit an das Fahrzeug durch Einspritzen eines Reinigungsfluids, wobei die Reinigungsstation weiter angeschlossen ist;
- unter der Steuerung des Diagnosewerkzeugs und gemäß einem Reinigungsverfahren, das von der erstellten Diagnose abhängt, Reinigen (205) der Antriebseinheit durch Einspritzen eines Reinigungsfluids, bei laufendem Motor, in den Einlass des Motors durch eine Reinigungsstation, die mit dem Kraftfahrzeug verbunden ist und an das Diagnosewerkzeug aufgrund seiner Steuerung durch das Diagnosewerkzeug angeschlossen ist, mit gleichzeitiger Bewegung, ebenfalls unter der Steuerung des Diagnosewerkzeugs, von beweglichen Elementen der Antriebseinheit, die zu den Elementen der Antriebseinheit gehören, die für Verschmutzung anfällig sind;
- Löschen (206) durch das Diagnosewerkzeug der gemeldeten Defekte, gegebenenfalls aus dem Speicher der Steuerelektronik der Antriebseinheit;
- Lernen (207), nach dem Reinigungsvorgang, durch das Diagnosewerkzeug in Echtzeit, bei laufendem Motor, des Ist-Zustands von autoadaptiven Elementen der Antriebseinheit, die zu den Elementen der Antriebseinheit gehören, die für Verschmutzung anfällig sind; und
- Aktualisieren (208) durch das Diagnosewerkzeug in der Steuerelektronik der Antriebseinheit von Betriebsparametern der Antriebseinheit, die normalerweise durch die Verschmutzung von Elementen der Antriebseinheit, die für Verschmutzung anfällig sind, beeinflusst werden, um den Ist-Zustand nach dem Reinigungsvorgang der autoadaptiven Elemente der Antriebseinheit unter den Elementen der Antriebseinheit, die für Verschmutzung anfällig sind, zu berücksichtigen.

2. Verfahren nach Anspruch 1, wobei die Reinigung des Motors über einen Zeitraum durchgeführt wird, der weiter von intrinsischen Parametern der Antriebseinheit, wie dem Hubraum des Motors, abhängt.

3. Verfahren nach Anspruch 1 oder 2, wobei die Elemente der Antriebseinheit, die für Verschmutzung anfällig sind, den Turbo, den Partikelfilter, das AGR-Ventil, das Bypass-Gehäuse, die Ventile, die Auspuffklappe und die Einspritzdüsen umfassen.

4. Verfahren nach Anspruch 3, wobei die beweglichen Elemente der Antriebseinheit unter den Elementen der Antriebseinheit, die für Verschmutzung anfällig sind, den Turbo, die Auspuffklappe, das AGR-Ventil, die Ventile und die Einspritzdüsen umfassen.

5. Verfahren nach Anspruch 3 oder nach Anspruch 4, wobei die autoadaptiven Elemente der Antriebseinheit unter den Elementen der Antriebseinheit, die für Verschmutzung anfällig sind, das AGR-Ventil, die Auspuffklappe und die Ventile umfassen.

6. Verfahren nach einem der Ansprüche 1 bis 5, wobei das Diagnosewerkzeug ein angeschlossenes Tablet ist, das mit der Reinigungsstation verknüpft ist.

7. Verfahren nach einem der Ansprüche 1 bis 6, wobei das Diagnosewerkzeug (10) über die OBD-Buchse (34) des Fahrzeugs (30) an die Steuerelektronik der Antriebseinheit angeschlossen ist.

8. Verfahren nach einem der Ansprüche 1 bis 7, wobei die Reinigungsstation (20) mittels einer USB^{™}-Verbindung (23, 13), einer Bluetooth^{™}-Verbindung oder einer Wi-Fi^{™}-Verbindung funktional an das Diagnosewerkzeug (10) angeschlossen ist.

9. Verfahren nach einem der Ansprüche 1 bis 8, wobei das Reinigungsfluid Wasserstoff ist.

10. Diagnosewerkzeug, das dazu angepasst ist, funktional an eine Reinigungsstation angeschlossen zu werden, durch Einspritzen eines Reinigungsfluids, einer Kraftfahrzeugantriebseinheit (30), die einen Verbrennungsmotor (31) umfasst, wobei das Diagnosewerkzeug Mittel zur Durchführung aller Schritte des Verfahrens nach einem der Ansprüche 1 bis 9 umfasst.

11. Anlage zur Reinigung einer Kraftfahrzeugantriebseinheit (30), die einen Verbrennungsmotor (31) umfasst, wobei die Anlage eine Reinigungsstation umfasst, die zum Einspritzen eines Reinigungsfluids in die Antriebseinheit bei laufendem Motor angepasst ist, und ein Diagnosewerkzeug nach Anspruch 10, das dazu angepasst ist, funktional an eine Reinigungsstation angeschlossen zu werden, um das Verfahren nach einem der Ansprüche 1 bis 9 durchzuführen.

12. Computerprogrammprodukt, das eine oder mehrere Anweisungssequenzen umfasst, die auf einem Speicherträger gespeichert sind, der von einer Maschine, die einen Prozessor umfasst, gelesen werden kann, wobei die Anweisungssequenzen dazu angepasst sind, alle Schritte des Verfahrens nach einem der Ansprüche 1 bis 9 durchzuführen, wenn das Programm aus dem Speicherträger ausgelesen und vom Prozessor ausgeführt wird.

## Claims

1. Method for cleaning a motor vehicle drive unit (30) comprising an internal combustion engine (31), said method comprising:
- reading (202), by a diagnostic tool connected to the motor vehicle (30), of faults in the drive unit which may have been reported by a control electronics system (32) of the drive unit during the prior operation of the drive unit and stored, if necessary, in a memory of said control electronics system;
- reading (203), by the diagnostic tool in real time, with the engine turned on, of operating parameters of the drive unit, and establishing a diagnosis relating to the clogging of members of the drive unit according to the faults signalled, if necessary, as well as said operating parameters of the drive unit;
- connecting (204), to the vehicle, a cleaning station (20) of the drive unit by injection of a cleaning fluid, said cleaning station being further connected;
- under the control of the diagnostic tool and according to a cleaning procedure which depends on the diagnosis established, cleaning (205) the drive unit by injection, with the engine turned on, of a cleaning fluid in the inlet of the engine by a cleaning station connected to the motor vehicle and connected to the diagnostic tool for the effects of its control by said diagnostic tool, with simultaneous movement, also under the control of the diagnostic tool, of movable members of the drive unit from among the members of said drive unit which are sensitive to clogging;
- removal (206) by the diagnostic tool of the faults signalled, if necessary, from the memory of the control electronics system of the drive unit;
- learning (207), after the cleaning operation, by the diagnostic tool, in real time, with the engine turned on, of the effective state of self-adaptive members of the drive unit from among the members of said drive unit which are sensitive to clogging; and
- updating (208) by the diagnostic tool, in the control electronics system of the drive unit, of operating parameters of said drive unit normally impacted by the clogging of members of said drive unit which are sensitive to clogging, to take account of the effective state, after the cleaning operation, of the self-adaptive members of the drive unit among the members of said drive unit which are sensitive to clogging.

2. Method according to claim 1, wherein the cleaning of the engine is performed for a duration which further depends on intrinsic parameters of the drive unit, like the cylinder of the engine.

3. Method according to claim 1 or claim 2, wherein the members of the drive unit which are sensitive to clogging comprise the turbo, the diesel particle filter, the EGR valve, the bypass box, the valves, the exhaust valve, and the injectors.

4. Method according to claim 3, wherein the movable members of the drive unit among the members of said drive unit which are sensitive to clogging comprise the turbo, the exhaust valve, the EGR valve, the valves and the injectors.

5. Method according to claim 3 or claim 4, wherein the self-adaptive members of the drive unit among the members of said drive unit which are sensitive to clogging comprise the EGR valve, the exhaust valve and the valves.

6. Method according to any one of claims 1 to 5, wherein the diagnostic tool is a connected tablet associated with the cleaning station.

7. Method according to any one of claims 1 to 6, wherein the diagnostic tool (10) is connected to the control electronics system of the drive unit by way of the OBD connector (34) of the vehicle (30).

8. Method according to any one of claims 1 to 7, wherein the cleaning station (20) is operationally connected to the diagnostic tool (10) by way of a USB^{™} connection (23, 13), a Bluetooth^{™} connection, or a Wi-Fi^{™} connection.

9. Method according to any one of claims 1 to 8, wherein the cleaning fluid is hydrogen.

10. Diagnostic tool suitable for being operationally connected to a cleaning station, by injection of a cleaning fluid, of a motor vehicle drive unit (30) comprising an internal combustion engine (31), said diagnostic tool comprising means for the implementation of all the steps of the method according to any one of claims 1 to 9.

11. Cleaning facility of a motor vehicle drive unit (30) comprising an internal combustion engine (31), said facility comprising a cleaning station suitable for the injection of a cleaning fluid in the drive unit, engine turned on, and a diagnostic tool according to claim 10 suitable for being operationally connected to a cleaning station in order to implement the method according to any one of claims 1 to 9.

12. Computer program product comprising one or more instruction sequences stored on a memory medium which can be read by a machine comprising a processor, said instruction sequences being suitable for carrying out all the steps of the method according to any one of claims 1 to 9 when the program is read in the memory medium and executed by the processor.
